(19) Europäisches Patentamt
European Patent Office
Office européen des brevets

(11) EP 0 686 647 B1

(12) **FASCICULE DE BREVET EUROPEEN**

(45) Date de publication et mention de la délivrance du brevet:
**28.01.1998 Bulletin 1998/05**

(51) Int Cl.[6]: **C08F 20/14**

(21) Numéro de dépôt: **95400861.1**

(22) Date de dépôt: **18.04.1995**

(54) **Procédé de fabrication d'un poly (méthacrylate de méthyle) à teneur élevée en triades syndiotactiques**

Verfahren zur Herstellung von Poly(methylmethacrylat) mit hohem Gehalt an syndiotaktischen Triaden

Process for preparing methyl methacrylate with high level of syndiotactic triads

(84) Etats contractants désignés:
**BE CH DE ES FR GB IT LI NL SE**

(30) Priorité: **06.06.1994 FR 9406891**

(43) Date de publication de la demande:
**13.12.1995 Bulletin 1995/50**

(73) Titulaire: **ELF ATOCHEM S.A.**
**92800 Puteaux (FR)**

(72) Inventeurs:
- **Wang, Jinshan**
**Pittsburgh, PA 15213 (US)**
- **Teyssie, Philippe**
**B-4121 Neuville en Condroz (BE)**
- **Heim, Philippe**
**F-64000 Pau (FR)**
- **Vuillemin, Bruno**
**F-64000 Pau (FR)**

(74) Mandataire: **Luziau, Nelly**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 0 434 316** **US-A- 3 228 922**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention porte sur un procédé de fabrication, par polymérisation anionique, d'un poly(méthacrylate de méthyle) ayant une teneur relativement élevée en triades syndiotactiques.

La teneur élevée en triades syndiotactiques du polyméthacrylate de méthyle permet de conférer à ce polymère une température de transition vitreuse plus élevée et donc, notamment, une plus grande résistance à la chaleur.

Il est connu de préparer le polyméthacrylate de méthyle par voie radicalaire. Cependant, les polymères obtenus ont des températures de transition vitreuse de l'ordre de 100-110°C, ce qui correspond à des teneurs en triades syndiotactiques d'ordre de 60-65 %.

On a aussi essayé de préparer ces polymères par voie anionique en présence d'un système d'amorçage comprenant un amorceur et un ligand. La présence d'un ligand est généralement nécessaire pour éviter les réactions secondaires dues à l'attaque, par les anions, des groupes esters du monomère méthacrylate de méthyle.

Les composés organiques de l'aluminium se sont révélés être des ligands efficaces, utilisés en combinaison avec les amorceurs organolithiens classiques, pour favoriser la polymérisation anionique du méthacrylate de méthyle dans le toluène. Parmi ces composés, on peut mentionner les trialkyl aluminiums et les dialkyl phénoxy-aluminium.

Les ligands du type $AlR_3$ (R = alkyle non encombré) sont utilisés depuis longtemps pour obtenir un poly(méthacrylate de méthyle) très syndiotactique. Par exemple, Hatada et al. (Makromol. Chem., Suppl. 1989, 15, 167) ont montré qu'un système d'amorçage $tBuLi/Et_3Al$ (rapport molaire amorceur/ligand supérieur à 1/3) peut conduire à un poly(méthacrylate de méthyle) à plus de 90 % de triades syndiotactiques dans le toluène à -78°C. L'inconvénient des ligands de ce type est que la polymérisation doit être effectuée à très basse température.

Des études ont été poursuivies avec utilisation des ligands $R_3Al$, mais avec des R encombrés (tels que di- ou triisobutyle), ce qui a conduit à des températures de polymérisation aux alentours de 0°C. Les polymères décrits dans EP-A-0 434316, obtenus de cette façon, ont notamment une valeur de Tg comprise entre 112°C et 119°C, impliquant un caractère syndiotactique proche de celui du poly(méthacrylate de méthyle) radicalaire, c'est-à-dire avec des teneurs en triades syndiotactiques d'environ 60-65 %.

Haddleton et al., Polymer Preprints, Vol. 34, 1993, pages 564-565, décrivent une syndiotacticité du poly(méthacrylate de méthyle) comprise entre 33 % et 67 % lors de l'utilisation d'un système tBuLi/triisobutylaluminium à température ambiante.

La société déposante a donc recherché à mettre au point un procédé de polymérisation du méthacrylate de méthyle pouvant être effectué à des températures au moins égales à 0°C, c'est-à-dire dans des conditions industrielles, et pouvant conduire à un polymère ayant une relativement grande teneur en triades syndiotactiques. Parallèlement, elle a recherché un meilleur contrôle de la polymolécularité (ou polydispersité) et une meilleure efficacité d'amorçage à ces températures, notamment à 20°C (température ambiante).

La présente invention a donc pour objet un procédé de fabrication d'un poly(méthacrylate de méthyle) ayant une teneur en triades syndiotactiques d'au moins 70 %, et avantageusement supérieure à 75 %, par polymérisation anionique du méthacrylate de méthyle à l'aide d'un système d'amorçage composé d'un amorceur organolithien ou organosodique et d'un ligand, caractérisé par le fait que l'on utilise, comme ligand, au moins un composé de formule (I):

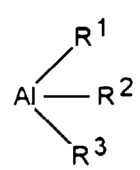

(I)

dans laquelle:

- $R^1$ et $R^2$ représentent chacun indépendamment un groupe phénoxy substitué ou non substitué ; et
- $R^3$ représente un groupe alkyle substitué ou non substitué ou un groupe phénoxy substitué ou non substitué ;

et, avant d'ajouter le monomère de méthacrylate de méthyle, on mélange l'amorceur et le ligand, à une température supérieure ou égale à 0°C.

Comme groupe alkyle entrant dans la définition de $R^3$, on peut citer notamment les groupes alkyles en $C_1$-$C_6$, tels que méthyle, éthyle, isobutyle.

Comme substituants possibles des groupes phénoxy entrant dans la définition de $R^1$, $R^2$ et $R^3$ et ceux du groupe alkyle entrant dans la définition de $R^3$, on peut citer des groupes inertes, tels que alkyle, aryle.

La société déposante a découvert qu'en utilisant, comme ligand, un di- ou triphénoxy-aluminium, la polymérisation

anionique du méthacrylate de méthyle en milieu solvant pouvait avoir lieu à 0°C et au-dessus et pouvait conduire à un poly(méthacrylate de méthyle) avec, d'une manière générale, une conversion quantitative, une distribution étroite des masses moléculaires (polymolécularité), et une syndiotacticité supérieure à 70 % et, particulièrement supérieure à celle obtenue antérieurement à température de polymérisation égale.

En outre, conformément à l'invention, il n'est plus nécessaire que le mélange ligand-amorceur soit fait à une température très basse, généralement - 78°C, pour éviter les réactions secondaires qui diminuent l'efficacité d'amorçage et augmentent l'indice de polymolécularité. Au contraire, le mélange ligand-amorceur selon l'invention peut être fait à une température allant jusqu'à 20°C et bien au-delà, sans problème particulier.

Le système selon l'invention permet donc la synthèse de poly(méthacrylate de méthyle) à teneur élevée en triades syndiotactiques dans des conditions plus favorables, tout en conservant une efficacité correcte et un bon contrôle des masses molaires et de la polymolécularité du polymère final.

Parmi les ligands pouvant être mis en oeuvre conformément à l'invention, on peut citer notamment le di-(2,6-di-tert.-butylphénoxy)-éthyl (ou méthyl ou -isobutyl) aluminium, et le tri-(2,6-di-tert.-butylphénoxy) aluminium.

Les composés de formule (I) sont des composés connus, pouvant généralement être fabriqués par réaction de phénols sur des composés de type $AlR_3$ (R = alkyle).

Conformément à la présente invention, on peut conduire la polymérisation à une température au moins égale à 0°C, par exemple de 0 à 60°C.

Comme composé amorceur, on utilise notamment un composé de formule :

$$R^4 - M \qquad (II)$$

dans laquelle $R^4$ désigne :

- un radical alkyle à chaîne droite ou ramifiée, contenant de 2 à 6 atomes de carbone ; ou
- un radical aryle à un ou plusieurs cycles, éventuellement substitués ; ou
- un radical alcényle en $C_2$-$C_6$ substitué par aryle ou alkylaryle ; ou
- un radical alkyle, linéaire ou ramifié, contenant 1 à 6 atomes de carbone, substitué par au moins un groupe phényle ;
- et M est un atome de métal alcalin tel que lithium ou sodium.

Comme exemples particuliers d'amorceurs, on peut citer le sec.-butyllithium, le n-butyllithium, le tert.-butyllithium, le fluorényllithium, l'alphaméthylstyryllithium, le 1,1 -diphénylhexyllithium, le diphénylméthyllithium et le 1,1-diphényl-3-méthylpentyllithium.

Le rapport molaire du ligand à l'amorceur dans le système d'amorçage selon l'invention peut varier dans des limites très larges. La quantité de ligand peut être, par exemple, largement excédentaire par rapport à la quantité d'agent amorceur. Cette quantité peut aussi être égale ou inférieure à la quantité d'agent amorceur. De préférence, on utilise une proportion molaire du ligand vis-à-vis de l'amorceur au moins égale à 1, pouvant aller jusqu'à 50, étant par exemple de 1 à 5.

La durée de la polymérisation dépend notamment de la concentration en monomère, en amorceur et de la température de polymérisation.

Par ailleurs, on conduit la polymérisation selon l'invention en l'absence d'humidité et d'oxygène et en présence ou non d'un solvant. Le solvant est choisi parmi les solvants apolaires tels que le benzène, l'éthylbenzène et le toluène.

Les poly(méthacrylates de méthyle) obtenus selon l'invention ont une masse moléculaire moyenne en nombre généralement comprise entre 5 000 et 500 000 ; un indice de polydispersité $\overline{Mw}/\overline{Mn}$ généralement compris entre 1,01 et 1,5, avantageusement entre 1,01 et 1,2. Leur teneur en triades syndiotactiques va généralement de 70 à 90 %.

Pour obtenir le poly(méthacrylate de méthyle) à partir du poly(méthacrylate de méthyle) vivant, on désactive ce dernier par réaction avec une source de protons consistant notamment en un alcool ou un acide.

Le procédé selon l'invention permet de préparer des polymères de méthacrylate de méthyle utilisables dans toute application nécessitant des polymères présentant des propriétés de résistance mécanique et tenue à la chaleur, tout en gardant une bonne transparence.

Par ailleurs, le poly(méthacrylate de méthyle) vivant selon l'invention peut conduire par copolymérisation séquencée également par voie anionique à des copolymères à blocs comportant au moins un bloc à base d'un poly(méthacrylate de méthyle) préparé par le procédé selon l'invention et un bloc ou plusieurs blocs, identiques ou différents, chacun à base d'un polymère autre que ce poly(méthacrylate de méthyle). Les monomères pour ce ou ces blocs supplémentaires peuvent être choisis notamment parmi les monomères méthacryliques, vinylaromatiques, diéniques et les maléimides.

Les exemples suivants illustrent la présente invention sans en limiter la portée. Dans ces exemples, les abréviations

suivantes sont utilisées :

- Me : méthyle ;
- Et : éthyle ;
- iBu : isobutyle ;
- Ar : 2,6-di-tert-butyl phenyl
- tBuLi : tert.-butyllithium ;
- sBuLi : sec.-butyllithium ;

nBuLi : n-butyllithium ;
DPHLi : 1,1-diphénylhexyllithium ;

- EIBLi : alithioisobutyrate d'éthyle;
- MMA : méthacrylate de méthyle

**Exemples 1 à 3** :

Préparation de ligands $R_{3-x}Al(OAr)x$, avec R = Me, Et ou iBu ; et x = 1, 2 ou 3. *Mode opératoire général :*

$$AlR_3 + xArOH \xrightarrow[\text{température ambiante}]{\text{toluène}} AlR_3(OAr)_x + xRH$$

Avant utilisation, ArOH a été purifié par sublimation, et le toluène a tout d'abord été porté au reflux sur $CaH_2$ pendant 24 heures, puis séché sur $PSt^-Li^+$.

ArOH a été introduit dans un ballon préalablement flambé, équipé d'un barreau-agitateur. Le toluène a tout d'abord été transféré dans le réacteur au moyen d'un capillaire en acier inoxydable. Après que la solution ait été refroidie jusqu'à -30°C, une quantité désirée d'$AlR_3$ (toujours 5 % en excès) a été lentement ajoutée. La température de réaction a ensuite été lentement augmentée jusqu'à la température ambiante (environ 20°C) ou 40°C, selon les composés recherchés. La solution peut être stockée plus de 12 heures à cette température.

***Exemple 1:***

***Préparation du di-(2,6-di-tert.-butyl-phénoxy)méthyl aluminium.***

9,5 g (4,5 x $10^{-2}$ mole) de 2,6-di-tert.-butylphénol ont été introduits dans un ballon préalablement flambé. 13 ml de toluène ont ensuite été transférés dans le réacteur par un capillaire en acier inoxydable. Après que la solution ait été refroidie jusqu'à -30°C, 10 ml d'$AlMe_3$ (2,3 M dans l'heptane) ont été ajoutés dans le ballon pendant 20 min. à -30°C. La température de réaction a ensuite été lentement augmentée jusqu'à 20°C. La réaction s'est poursuivie à cette température pendant toute une nuit.

***Exemple 2:***

***Polymérisation du MMA dans le toluène à 20° C avec tBuLi comme initiateur et le di-(2,6-di-tert.-butylphénoxy) éthyl aluminium comme ligand.***

Dans un ballon préalablement flambé, 2 ml d'une solution 0,5 M de di(2,6-ditert.-butylphénoxy)éthyl aluminium ont été introduits à l'aide d'une seringue. Après élimination du solvant par pompage, 50 ml de toluène fraîchement séché (sur $PSt^-Li^+$) ont été introduits dans le ballon à l'aide d'un capillaire en acier inoxydable. A la température ambiante (environ 20°C), 1 ml de tBuLi (0,18 M) a été ajouté à la solution mentionnée ci-dessus et a été mélangé avec le ligand pendant 10 min. à cette température. A la même température, 2,0 ml de MMA ont été ajoutés et polymérisés pendant 2 heures. Le produit final a été récupéré par précipitation de la solution de polymérisation dans l'heptane et séché à 60°C sous vide pendant 48 heures. Comme résultat, on a obtenu 1,80 g de PMMA (rendement de 96 %).

Caractérisation du PMMA obtenu

Une chromatographie d'exclusion stérique (SEC) a été effectuée par utilisation d'un appareil de chromotographie liquide Hewlett Packard 1090, équipé de 4 colonnes ($10^5$, $10^3$ 500 et 100 Angströms) et d'un détecteur d'indice de réfraction Hewlett Packard 1037A. Les résultats obtenus sont les suivants :

- $\overline{Mn}_{SEC}$ = 26100
- $\overline{Mw}/\overline{Mn}$ = 1,14

$\overline{Mn}_{calculée}$ = 10 400

[$\overline{Mn}_{calculée}$ = Conversion x Poids du monomère (g)/$C_{amorceur}$ (mole);

[f = efficacité de l'amorceur = $\overline{Mn}_{calculée}$ / $\overline{Mn}_{SEC}$ = 0,40

Les analyses de la microstructure des polymères ont été effectuées au moyen de la RMN $^1H$.

- triades syndiotactiques (S) : 77 %
- triades hétérotactiques (H) : 22 %
- triades isotactiques (I) : 1 %

***Exemple 3 (Comparatif)*** *:*

***Polymérisation du MMA dans le toluène à 20° C à l'aide de tBuLi comme amorceur et du (2,6-di-tert.-butylphénoxy)-diéthyl aluminium comme ligand*.**

On a conduit le même mode opératoire qu'à l'exemple 2. Le rendement a été de 50 % et les caractéristiques du PMMA final étaient les suivantes (obtenues dans les mêmes conditions qu'à l'exemple 2) :

- $\overline{Mn}_{SEC}$ = 24800
- $\overline{Mw}/\overline{Mn}$ = 1,28 ; [$\overline{Mn}_{calculée}$ = 5 600 ; efficacité de l'amorceur = 0,23]
- triades syndiotactiques (S): 68 %
- triades hétérotactiques (H): 32 %
- triades isotactiques (I) : 0 %

On a conduit d'autres polymérisations anioniques du MMA dans le toluène en faisant varier le type d'amorceur, le type de ligand, le rapport molaire ligand/amorceur, la température de polymérisation et la durée de polymérisation.

Dans les exemples 4 à 27, le mélange de l'amorceur et du ligand a lieu à 0°C pendant 30 minutes. Les températures indiquées au tableau correspondent alors à celles de la polymérisation.

Les résultats, obtenus dans les mêmes conditions que précédemment, sont rapportés dans le tableau suivant.

## Tableau

| EXEMPLE | Système d'amorçage | | | Rapport molaire Ligand/ Amorceur | Température (°C) | Durée (h) | Conversion (% en poids) | $\overline{Mn}$ calculée | $\overline{Mn}_{SEC}$ | $\overline{Mw}$ / $\overline{Mn}$ | f | S | H | I |
|---|---|---|---|---|---|---|---|---|---|---|---|---|---|---|
| | Amorceur | Ligand $R_{3-x}Al(OAr)_x$ R | X | | | | | | | | | | | |
| 3 (comparatif) | tBuLi | Et | 1 | 5/1 | 20 | 2 | 50 | 5 600 | 24 800 | 1,28 | 0,23 | 68,1 | 31,7 | 0,2 |
| 2 | tBuLi | Et | 2 | 5/1 | 20 | 3 | 97 | 10 000 | 26 100 | 1,14 | 0,38 | 76,9 | 22,3 | 0,8 |
| 4 (comparatif) | tBuLi | Et | 1 | 5/1 | 0 | 1,5 | 100 | 12 200 | 25 300 | 1,11 | 0,48 | 75,7 | 24,0 | 0,3 |
| 5 | tBuLi | Et | 2 | 5/1 | 0 | 3 | 71 | 11 100 | 24 100 | 1,07 | 0,46 | 80,0 | - | - |
| 6 (comparatif) | tBuLi | Et | 1 | 5/1 | 20 | 2 | 100 | 16 600 | 31 500 | 1,37 | 0,51 | 69,2 | 27,7 | 3,1 |
| 7 | tBuLi | Et | 2 | 5/1 | 20 | 4 | 95 | 12 800 | 28 600 | 1,16 | 0,45 | 79,4 | 20,1 | 0,5 |
| 8 | tBuLi | Et | 2 | 5/1 | 22 | 2 | 97 | 17 200 | 27 100 | 1,13 | 0,63 | 78,7 | 20,8 | 0,5 |
| 9 | tBuLi | Néant | 3 | 5/1 | 40 | 2 | 35 | 4 400 | 27 900 | 1,14 | 0,16 | 72,6 | 25,8 | 1,6 |
| 10 (comparatif) | tBuLi | Me | 1 | 5/1 | 20 | 1 | 80 | 9 400 | 51 600 | 1,76 | 0,18 | 60,5 | 37,2 | 2,3 |
| 11 | tBuLi | Me | 2 | 5/1 | 20 | 1 | 83 | 10 600 | 25 500 | 1,09 | 0,42 | 80,5 | - | - |
| 12 (comparatif) | sBuLi | Et | 1 | 5/1 | 20 | 2 | 55 | 5 600 | 33 300 | 1,93 | 0,17 | 62 | 36,8 | 1,2 |
| 13 | sBuLi | Et | 2 | 5/1 | 20 | 2 | 78 | 7 800 | 45 100 | 1,82 | 0,17 | 70,6 | 27,7 | 1,7 |
| 14 (comparatif) | nBuLi | Et | 1 | 5/1 | 20 | 2 | 100 | 12 500 | 70 700 | 2,61 | 0,18 | 60,1 | 35,8 | 4,1 |
| 15 | nBuli | Et | 2 | 5/1 | 20 | 3 | 100 | 11 000 | 59 600 | 1,54 | 0,18 | 70,7 | 25,7 | 3,6 |

**Suite du tableau**

| EXEMPLE | Système d'amorçage | | | Rapport molaire Ligand/ Amorceur | Température (°C) | Durée (h) | Conversion (% en poids) | $\overline{Mn}$ calculée | $\overline{Mn}_{SEC}$ | $\overline{Mw}$ / $\overline{Mn}$ | f | S | H | I |
|---|---|---|---|---|---|---|---|---|---|---|---|---|---|---|
| | Amorceur | Ligand $R_{3-x}Al(OAr)_x$ | | | | | | | | | | | | |
| | | R | X | | | | | | | | | | | |
| 16 (comparatif) | EIBLi | iBu | 0 | 5/1 | 20 | 2 | 65 | 13000 | 36 100 | 1,25 | 0,36 | 55 | 35 | 10 |
| 17* | EIBLi | Me | 2 | 5/1 | 20 | 2 | 100 | 23000 | 75 700 | 1,15 | 0,30 | 74,0 | 24 | 2 |
| 18 (comparatif) | DPHLi | Me | 1 | 4/1 | 0 | 4 | 43 | 6670 | 81 300 | 3,75 ** | 0,10 | 67,2 | 28,7 | 4,1 |
| 19 (comparatif) | DPHLi | Me | 1 | 4/4 | 20 | 4 | 70,5 | 11 000 | 88 600 | 3,95 ** | 0,12 | 62,0 | 31,7 | 6,3 |
| 20 | DPHLi | Me | 2 | 4/1 | 0 | 4 | 100 | 27 000 | 129 800 | 1,12 | 0,21 | 76,7 | 21,4 | 1,9 |
| 21 | DPHLi | Me | 2 | 4/1 | 20 | 4,5 | 53 | 12 500 | 120 400 | 1,26 | 0,10 | 72,2 | 25,1 | 2,7 |
| 22 | DPHLi | Me | 2 | 5/1 | 20 | 5 | 72 | 16 500 | 361 200 | 1,42 | 0,05 | - | - | - |
| 23 (comparatif) | DPHLi | IBu | 1 | 5/1 | 0 | 5 | 41 | 4 100 | 79 000 | 1,89 | 0,05 | 55,5 | 34,0 | 9,5 |
| 24 | DPHLi | iBu | 2 | 5/1 | 0 | 5 | 90 | 8 300 | 20 500 | 1,40 | 0,40 | 80,6 | 18,3 | 1,1 |
| 25 | DPHLi | Néant | 3 | 4/1 | 0 | 3 | 90 | 13 500 | 36 300 | 1,15 | 0,37 | 71,6 | 26,5 | 1,9 |
| 26 | DPHLi | Néant | 3 | 4/1 | 20 | 3 | 100 | 15 500 | 59 900 | 1,16 | 0,26 | 72,8 | 26,5 | 0,7 |
| 27 | DPHLi | Néant | 3 | 4/1 | 40 | 3 | 57 | 13 500 | 37 700 | 1,70 | 0,36 | 73,8 | 23,2 | 3,0 |

* : Concentration en monomère = 5 % en poids

** : Bimodal

On peut noter, à partir des exemples précédents, que, pour une même température de polymérisation, la polymolécularité et la tacticité (triades syndiotactiques) des polymères obtenus selon l'invention sont améliorées par rapport à celles des témoins.

On constate aussi que l'augmentation de la température du mélange de l'amorceur et du ligand, de 0°C à 20°C, ne fait pas varier notablement la polymolécularité et la tacticité (triades syndiotactiques) des polymères.

Il est important de noter que, lorsque le DPHLi est complexé avec 4 équivalents molaires de di-(2,6-di-tert.-butylphénoxy)méthyl aluminium à 0°C, la polymérisation anionique du MMA peut conduire au produit avec une masse moléculaire très élevée (supérieure à $10^5$) et une distribution très étroite des masses moléculaires (environ 1,12).

Il a par ailleurs été constaté que le mélange du 1,1-diphénylhexyllithium (DPHLi) et du ligand de type $AlR_2$ (OAr) (avec R = alkyle et Ar = phényle éventuellement substitué) (ligand en dehors de l'invention) est incolore à jaune, signe d'une forte coordination entre l'amorceur et l'aluminium, alors que le mélange DPHLi et $AlR(OAr)_2$ est rouge, ce qui est l'indice d'une faible coordination. Il en résulte que les complexes formés sont différents dans les deux cas, celui obtenu selon l'invention étant plus stable aux températures envisagées.

## Revendications

1. Procédé de fabrication d'un poly(méthacrylate de méthyle) ayant une teneur en triades syndiotactiques d'au moins 70 % par polymérisation anionique du méthacrylate de méthyle à l'aide d'un système d'amorçage composé d'un amorceur organolithien ou organosodique et d'un ligand, caractérisé par le fait que l'on utilise, comme ligand, au moins un composé de formule (I) :

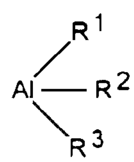

(I)

dans laquelle :

- $R^1$ et $R^2$ représentent chacun indépendamment un groupe phénoxy substitué ou non substitué ; et
- $R^3$ représente un groupe alkyle substitué ou non substitué ou un groupe phénoxy substitué ou non substitué ;

et, avant d'introduire le monomère de méthacrylate de méthyle on mélange l'amorceur et le ligand, à une température supérieure ou égale à 0°C.

2. Procédé selon la revendication 1, caractérisé par le fait que l'on choisit, comme ligand, le di-(2,6-di-tert.-butylphénoxy)-éthyl (ou méthyl ou -isobutyl) aluminium.

3. Procédé selon la revendication 1, caractérisé par le fait que l'on choisit, comme ligand, le tri-(2,6-di-tert.-butylphénoxy) aluminium.

4. Procédé selon l'une des revendications 1 à 3, caractérisé par le fait que l'on conduit la réaction de polymérisation à une température au moins égale à 0°C.

5. Procédé selon la revendication 4, caractérisé par le fait que l'on conduit la réaction à une température de 0 à +60°C.

6. Procédé selon l'une des revendications 1 à 5, caractérisé par le fait que l'on utilise, comme composé amorceur, un composé de formule :

$$R^4 - M \quad (II)$$

dans laquelle $R^4$ désigne :

- un radical alkyle à chaîne droite ou ramifiée, contenant de 2 à 6 atomes de carbone ; ou

- un radical aryle à un ou plusieurs cycles, éventuellement substitué ; ou
- un radical alcényle en $C_2$-$C_6$ substitué par aryle ou alkylaryle ; ou
- un radical alkyle, linéaire ou ramifié, contenant 1 à 6 atomes de carbone, substitué par au moins un groupe phényle ;
- et M est un atome de métal alcalin, éventuellement lithium ou sodium.

**7.** Procédé selon la revendication 6, caractérisé par le fait que le composé organolithien amorceur est choisi parmi le sec.-butyllithium, le n-butyllithium, le tert.-butyllithium, le fluorényllithium, l'alphaméthylstyryllithium, le 1,1-diphénylhexyllithium, le diphénylméthyllithium et le 1,1-diphényl-3-méthylpentyllithium.

**8.** Procédé selon l'une des revendications 1 à 7, caractérisé par le fait que l'on utilise une proportion molaire du ligand vis-à-vis de l'amorceur au moins égale à 1, pouvant aller jusqu'à 50.

**9.** Procédé selon l'une des revendications 1 à 8, caractérisé par le fait que l'on conduit la polymérisation en l'absence d'humidité et d'oxygène.

**10.** Procédé selon la revendication 9 caractérisé par le fait que l'on conduit la polymérisation en présence d'un solvant apolaire choisi parmi le benzène, le toluène et l'éthylbenzène.

**Patentansprüche**

**1.** Verfahren zur Herstellung eines Polymethylmethacrylates mit einem Gehalt an syndiotaktischen Triaden von mindestens 70 % durch anionische Polymerisation des Methylmethacrylates mit Hilfe eines aus einem Organolithium- oder Organonatriumstarter und einem Liganden bestehenden Startersystems, dadurch gekennzeichnet, daß man als Liganden mindestens eine Verbindung der Formel (I)

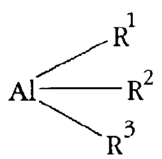

(I)

verwendet, in der:

- $R^1$ und $R^2$ jeweils, unabhängig voneinander, eine gegebenenfalls substituierte Phenoxygruppe darstellen; und
- $R^3$ eine gegebenenfalls substituierte Alkylgruppe oder eine gegebenenfalls substituierte Phenoxygruppe darstellt;

und man vor der Zugabe des Methylmethacrylatmonomers den Starter und den Liganden bei einer Temperatur gleich oder oberhalb 0 °C mischt.

**2.** Verfahren nach Anspruch 1, dadurch gekennzeichnet, daß man als Liganden das Di-(2,6-di-tert.-butylphenoxy) methylaluminium, das Di-(2,6-di-tert.-butylphenoxy)ethylaluminium oder das Di-(2,6-di-tert.-butylphenoxy)isobutylaluminium auswählt.

**3.** Verfahren nach Anspruch 1, dadurch gekennzeichnet, daß man als Liganden das Tri-(2,6-di-tert.-butylphenoxy) aluminium auswählt.

**4.** Verfahren nach einem der Ansprüche 1 bis 3, dadurch gekennzeichnet, daß man die Polymerisationsreaktion bei einer Temperatur von mindestens 0 °C durchführt.

**5.** Verfahren nach Anspruch 4, dadurch gekennzeichnet, daß man die Reaktion bei einer Temperatur von 0 °C bis +60 °C durchführt.

**6.** Verfahren nach einem der Ansprüche 1 bis 5, dadurch gekennzeichnet, daß man als Starterverbindung eine Verbindung der Formel (II)

$$R^4 - M \qquad (II)$$

verwendet, in der:

der Rest $R^4$

- einen geradkettigen oder verzweigten Alkylrest mit 2 bis 6 Kohlenstoffatomen,
- einen gegebenenfalls substituierten Arylrest mit einem oder mehreren Ringen,
- einen aryl- oder alkylarylsubstituierten $C_2$-$C_6$-Alkylrest oder
- einen linearen oder verzweigten, mit mindestens einer Phenylgruppe substituierten Alkylrest mit 1 bis 6 Kohlenstoffatomen

darstellt und

- M ein Alkalimetallatom ist, gegebenenfalls Lithium oder Natrium.

**7.** Verfahren nach Anspruch 6, dadurch gekennzeichnet, daß die Organolithiumstarterverbindung ausgewählt ist aus sek.-Butyllithium, n-Butyllithium, tert.-Butyllithium, Fluorenyllithium, α-Methylstyryllithium, 1,1 -Diphenylhexyllithium, Diphenylmethyllithium und 1,1-Diphenyl-3-methylpentyllithium.

**8.** Verfahren nach einem der Ansprüche 1 bis 7, dadurch gekennzeichnet, daß man eine molare Menge an Ligand im Verhältnis zum Starter von 1 verwendet, die bis zu 50 erreichen kann.

**9.** Verfahren nach einem der Ansprüche 1 bis 8, dadurch gekennzeichnet, daß man die Polymerisation in Abwesenheit von Feuchtigkeit und Sauerstoff durchführt.

**10.** Verfahren nach Anspruch 9, dadurch gekennzeichnet, daß man die Polymerisation in Gegenwart eines apolaren Lösungsmittels durchführt, das aus Benzol, Toluol und Ethylbenzol ausgewählt ist.

**Claims**

**1.** Process for the manufacture of a poly(methyl methacrylate) having a content of syndiotactic triads of at least 70% by anionic polymerization of methyl methacrylate using an initiation system composed of an organolithium or organosodium initiator and of a ligand, characterized in that use is made, as ligand, of at least one compound of formula (I):

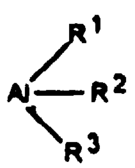

(I)

in which:

- $R^1$ and $R^2$ each independently represent a substituted or unsubstituted phenoxy group; and
- $R^3$ represents a substituted or unsubstituted alkyl group or a substituted or unsubstituted phenoxy group;

and, before introducing the methyl methacrylate monomer, the initiator and the ligand are mixed at a temperature greater than or equal to 0°C.

**2.** Process according to Claim 1, characterized in that di (2,6-di-tert-butylphenoxy) ethyl (or methyl or isobutyl)aluminium is chosen as ligand.

**3.** Process according to Claim 1, characterized in that tri(2,6-di-tert-butylphenoxy)aluminium is chosen as ligand.

4. Process according to one of Claims 1 to 3, characterized in that the polymerization reaction is carried out at a temperature of at least 0°C.

5. Process according to Claim 4, characterized in that the reaction is carried out at a temperature of 0 to +60°C.

6. Process according to one of Claims 1 to 5, characterized in that use is made, as initiator compound, of a compound of formula:

$$R^4\text{-}M \qquad (II)$$

in which $R^4$ denotes:

- a straight- or branched-chain alkyl radical containing from 2 to 6 carbon atoms; or
- an optionally substituted aryl radical containing one or more rings; or
- a $C_2$-$C_6$ alkenyl radical substituted by aryl or alkylaryl; or
- a linear or branched alkyl radical, containing 1 to 6 carbon atoms, substituted by at least one phenyl group;
- and M is an alkali metal atom, possibly lithium or sodium.

7. Process according to Claim 6, characterized in that the initiator organolithium compound is chosen from sec-butyllithium, n-butyllithium, tert-butyllithium, fluorenyllithium, α-methylstyryllithium, 1,1-diphenylhexyllithium, diphenylmethyllithium and 1,1-diphenyl-3-methylpentyllithium.

8. Process according to one of Claims 1 to 7, characterized in that use is made of a molar proportion of the ligand with respect to the initiator of at least 1 and which can range up to 50.

9. Process according to one of Claims 1 to 8, characterized in that the polymerization is carried out in the absence of moisture and of oxygen.

10. Process according to Claim 9, characterized in that the polymerization is carried out in the presence of a non-polar solvent chosen from benzene, toluene and ethylbenzene.